# EUROPÄISCHE PATENTANMELDUNG

(11) **EP 1 870 756 A1**
(43) Veröffentlichungstag der Anmeldung: **26.12.2007**
(21) Anmeldenummer: 06012841.0
(22) Anmeldetag: 22.06.2006
(51) Int. Cl.: G02B 11/34, G03B 21/32

(54) **Projektionsobjektiv fester Brennweite für die digitale Projektion**

(71) Anmelder: BCI Finanz AG, 6304 Zug (CH)
(72) Erfinder: Dr. Bernward Bretthauer, Gottingen (DE)
(74) Vertreter: Quermann, Helmut

(57) **Zusammenfassung**

Die Erfindung schlägt ein Projektionsobjektiv fester Brennweite für die digitale Projektion mit folgender Anordnung der Linsen in der Reihenfolge vom Bild (Vergrößerungsseite) zum Objekt (Verkleinerungs- und Beleuchtungsseite) vor:
- eine erste negative Linse (1),
- eine zweite negative Linse (2),
- eine dritte Linse (3),
- eine vierte positive Linse (4),
- eine fünfte Linse (5),
- eine sechste positive Linse (6),
- eine siebte negative Linse (7).
- eine achte positive Linse (8)
- eine neunte positive Linse (9)

Mittels eines solchen Objektivs können die Qualitätsanforderungen im Bereich der digitalen Projektion mit einer minimalen Anzahl von Linsen erfüllt werden.

## Beschreibung

### Anwendungsgebiet:

Anwendungsgebiet der Erfindung ist die digitale Projektion, insbesondere für das digitale Kino. Das Projektionsobjektiv findet zum Beispiel als Grundobjektiv mit einem anamorphotischen Vorsatz Verwendung.

### Stand der Technik:

Im digitalen Kino eingesetzte Projektoren zeichnen sich durch ein Strahlteilerprisma zwischen den Chips und dem Objektiv aus. Der Glasweg beträgt bis zu 119,5 mm, wodurch ein Farblängsfehler sowie ein Öffnungsfehler entsteht. Diese Fehler müssen vom Projektionsobjektiv korrigiert werden. Daher sind für andere Fälle berechnete Objektive grundsätzlich ungeeignet.

Am Markt werden im wesentlichen Zoomobjektive angeboten. Für Festinstallationen ist jedoch ein Zoomobjektiv nicht notwendig. Des Weiteren geschieht die Konversion des Chip-Formats auf das Bild-Format 2.35:1 im digitalen Kino vorteilhaft mit Hilfe eines anamorphotischen Vorsatzes. Um die Abmessungen des Vorsatzes und damit die Kosten zu verringern ist es erforderlich, dass die leinwandseitige Pupille des Objektivs nicht zu weit von der Frontlinse entfernt ist. Dieses Ziel ist mit Zoomobjektiven schwer zu verwirklichen.

In DE 103 53 563 B4 wird ein Objektiv mit fester Brennweite beschrieben, das die Anforderungen erfüllt. Allerdings enthält dieses Objektiv in allen angegebenen Ausführungsformen eine asphärische Fläche, welche die Produktionskosten erhöht.

### Ziel der Erfindung:

Ziel ist ein Objektiv mit fester Brennweite, welches die Qualitätsanforderungen im Bereich der digitalen Projektion, insbesondere des digitalen Kinos, mit einer minimalen Anzahl von Linsen erfüllt. Der Abstand der leinwandseitigen Pupille zur Frontlinse soll so bemessen sein, dass sich gegenüber den am Markt erhältlichen Zoomobjektiven eine deutliche Reduzierung der Maße des erforderlichen anamorphotischen Vorsatzes ergibt.

Wenn auch die Anforderung an die Abbildungsleistung den Einsatz von Spezialgläsern mit einem Wert der abbeschen Zahl von ν_{d} > 75 unerlässlich erscheinen lässt, so ist doch der Einsatz dieser Gläser auf so wenige Linsen wie möglich zu beschränken, da sie sowohl in der Beschaffung als auch in der Bearbeitung hohe Kosten verursachen. Besonders hohe Kosten verursacht der Einsatz von Linsen aus Calziumfluorid oder von Gläsern mit einem Wert von ν_{d} > 85, dies sollte vermieden werden. Ebenso zu vermeiden sind asphärische Flächen, die Zahl der Linsen ist so gering wie möglich zu halten.

### Darlegung der Erfindung:

Das genannte Ziel der Erfindung wird erreicht durch ein Projektionsobjektiv gemäß den Merkmalen des Patentanspruches 1, somit durch ein Projektionsobjektiv fester Brennweite für die digitale Projektion mit folgender Anordnung der Linsen in der Reihenfolge vom Bild (Vergrößerungsseite) zum Objekt (Verkleinerungs- und Beleuchtungsseite):
- eine erste negative Linse,
- eine zweite negative Linse,
- eine dritte Linse,
- eine vierte positive Linse,
- eine fünfte Linse,
- eine sechste positive Linse,
- eine siebte negative Linse,
- eine achte positive Linse,
- eine neunte positive Linse.

Gemäß einer besonderen Ausführungsform der Erfindung ist, gemäß Patentanspruch 2, das Projektionsobjektiv mit folgender Anordnung der Linsen in der Reihenfolge vom Bild (Vergrößerungsseite) zum Objekt (Verkleinerungs- und Beleuchtungsseite) gestaltet:
- eine erste negative Linse mit einer konvexen Fläche auf der Bildseite und einer konkaven Fläche auf der Objektseite,
- eine zweite bikonkave Linse,
- eine dritte Linse mit einer konkaven Fläche auf der Bildseite und einer konvexen Fläche auf der Objektseite,
- eine vierte bikonvexe Linse,
- eine fünfte Linse mit einer konkaven Fläche zur Objektseite,
- eine sechste bikonvexe Linse,
- eine siebte Linse mit einer konkaven Fläche zur Objektseite,
- eine achte bikonvexe Linse,
- eine neunte bikonvexe Linse.

Es ist insbesondere vorgesehen, dass die fünfte Linse zur Bildseite eine konvexe oder konkave Fläche aufweist und/oder die siebte Linse zur Bildseite eine konkave oder konvexe Fläche aufweist.

Vorteilhaft ist des Weiteren zwischen der vierten und fünften Linse eine Blende angeordnet.

Bezogen auf die Beziehungen der Werte der Brechzahlen n_{d} und der abbeschen Zahlen ν_{d} sind vorzugsweise folgende Wertebereiche erfüllt:

| Linse Nr. | n_{d} | ν_{d} |
|---|---|---|
| 1 | Größer als 1,6 | Kleiner als 62 |
| 2 | Zwischen 1,58 und 1,8 | Kleiner als 62 |
| 3 | Größer als 1,65 | Kleiner als 41 |
| 4 | Zwischen 1,6 und 1,8 | Zwischen 45 und 62 |
| 5 | Größer als 1,64 | Zwischen 30 und 45 |
| 6 | Kleiner als 1,74 | Größer als 44 |
| 7 | Kleiner als 1,75 | Zwischen 40 und 66 |
| 8 | Kleiner als 1,50 | Größer als 70 |
| 9 | Kleiner als 1,50 | Größer als 70 |

Insbesondere ergeben sich für diese Kenngrößen folgende Wertebereiche:

| Linse Nr. | n_{d} | ν_{d} |
|---|---|---|
| 1 | Größer als 1,7 | Kleiner als 50 |
| 2 | Zwischen 1,56 und 1,8 | Kleiner als 62 |
| 3 | Größer als 1,65 | Kleiner als 35 |
| 4 | Zwischen 1,6 und 1,8 | Zwischen 45 und 60 |
| 5 | Größer als 1,65 | Zwischen 30 und 45 |
| 6 | Kleiner als 1,7 | Größer als 45 |
| 7 | Kleiner als 1,75 | Zwischen 40 und 61 |
| 8 | Kleiner als 1,50 | Größer als 70 |
| 9 | Kleiner als 1,50 | Größer als 70 |

Es wird als besonders vorteilhaft angesehen, wenn für alle Linsen die abbesche Zahl ν_{d} kleiner als 85 ist.

Die siebte und die achte Linse sind vorzugsweise miteinander verkittet.

Bei dem erfindungsgemäßen Objektiv lässt die Korrektur sowie die Schnittweite des Objektivs vorzugsweise einen Strahlteiler zwischen Objektiv und dem zu projizierenden Objekt zu. Dieser Strahlteiler besitzt einen Glasweg von 80 mm bis 130 mm, vorzugsweise 110 mm bis 130 mm, insbesondere 115 mm bis 125 mm.

Die Erfindung ermöglicht eine objektseitige Pupille, die sehr weit vom Objekt entfernt ist. Die objektseitige Pupille ist wenigstens 800 mm, vorzugsweise wenigstens 1200 mm, insbesondere wenigstens 2000 mm vom Objekt entfernt.

Es wird als besonders vorteilhaft angesehen, insbesondere unter Kostengründen, wenn sämtliche Linsenflächen der Linsen des Projektionsobjektivs sphärisch oder plan sind.

### Ausführungsbeispiele der Erfindung:

Weitere Merkmale der Erfindung sind in den Unteransprüchen und der Erläuterung der Ausführungsbeispiele dargestellt, wobei bemerkt wird, dass alle Einzelmerkmale und Kombinationen von Einzelmerkmalen erfindungswesentlich sind.

Die Erfindung ist anhand zweier Ausführungsformen dargestellt, ohne auf diese beschränkt zu sein.

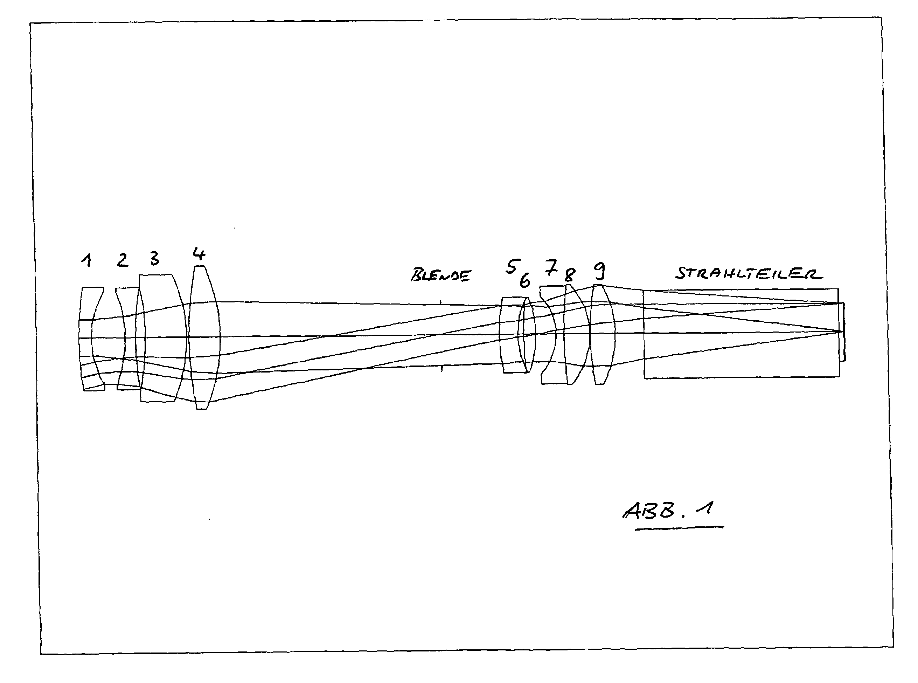

Abbildung 1 zeigt einen Linsenschnitt einer beispielhaften Ausführung der vorliegenden Erfindung. Die genauen optischen Daten dieses Projektionsobjektivs sind auch im Anspruch 12 ausgeführt, wobei sich das Projektionsobjektiv gemäß dieser Ausführungsform wie folgt darstellt:
Daten der Linsen 1 bis 9:

| Kommentar | Fläche | Radius [mm] | Dicke [mm] | n_{d} | ν_{d} |
|---|---|---|---|---|---|
| Linse 1 | 1 | 215.573 | 7.400 | 1.8052 | 25.4 |
| | 2 | 60.054 | 19.873 | | |
| Linse 2 | 3 | -86.116 | 6.198 | 1.7292 | 54.5 |
| | 4 | 214.588 | 5.812 | | |
| Linse 3 | 5 | -159.767 | 25.000 | 1.7174 | 29.5 |
| | 6 | -97.046 | 1.422 | | |
| Linse 4 | 7 | 233.759 | 19.000 | 1.7292 | 54.5 |
| | 8 | -110.662 | 133.385 | | |
| Blende | 9 | Plan | 34.694 | | |
| Linse 5 | 10 | 119.584 | 11.300 | 1.8061 | 40.6 |
| | 11 | 52.245 | 3.364 | | |
| Linse 6 | 12 | 192.641 | 7.500 | 1.5168 | 64.2 |
| | 13 | -65.831 | 12.288 | | |
| Linse 7 | 14 | -37.013 | 5.000 | 1.5827 | 46.6 |
| Linse 8 | 15 | 293.564 | 15.600 | 1.4970 | 81.6 |
| | 16 | -48.182 | 0.200 | | |
| Linse 9 | 17 | 181.597 | 15.000 | 1.4970 | 81.6 |
| | 18 | -65.785 | 17.000 | | |
| Strahlteiler | 19 | Plan | 116.500 | 1.5168 | 64.2 |
| Schutzglas | 20 | Plan | 3.000 | 1.5085 | 61.2 |
| | 21 | Plan | 0.507 | | |
| Objekt | | Plan | | | |

Aus praktischen Gründen ist das Objektiv in umgekehrter Lage (Abbildung von der Vergrößerungsseite zur Verkleinerungsseite) dargestellt. Ein negatives Vorzeichen beim Radius bedeutet, dass der Mittelpunkt des Linsenfläche relativ zum Scheitel auf der Vergrößerungsseite liegt. Die Flächen 1 bis 18 beschreiben das Objektiv gemäß Anspruch; die Flächen 19 bis 22 stellen Strahlteiler, Schutzglas und Chip des Projektors dar.

Bei dieser Ausführungsform stellt der Glasblock mit der Gesamtdicke von 119,5 mm ein vereinfachtes optisches Modell des Strahlteilers im Projektor dar. Aus praktischen Gründen ist das Objektiv in umgekehrter Lage (Abbildung von der Vergrößerungsseite zur Verkleinerungsseite) dargestellt. Die Brennweite des Objektivs beträgt 57 mm, die relative Öffnung 1 : 2,5. Auf der Verkleinerungsseite ist ein Kreis mit Halbmesser 18 mm nutzbar, was auf der Vergrößerungsseite zu einem maximalen Projektionswinkel von 2w=35,1 ° führt. Der Abstand der Pupille vom ersten Linsenscheitel beträgt auf der Vergrößerungsseite 77,4 mm. Auf der Verkleinerungsseite beträgt der Abstand der Pupille über 6 Meter. Dies bedeutet, dass das Objektiv auf dieser Seite nahezu telezentrisch ist und damit optimal an das Beleuchtungssystem des Projektors angepasst.

Das Objektiv kommt mit nur 9 sphärischen Linsen aus, wobei lediglich die beiden letzten Linsen aus Gläsern mit einer abbeschen Zahl ν_{d} > 75 bestehen.

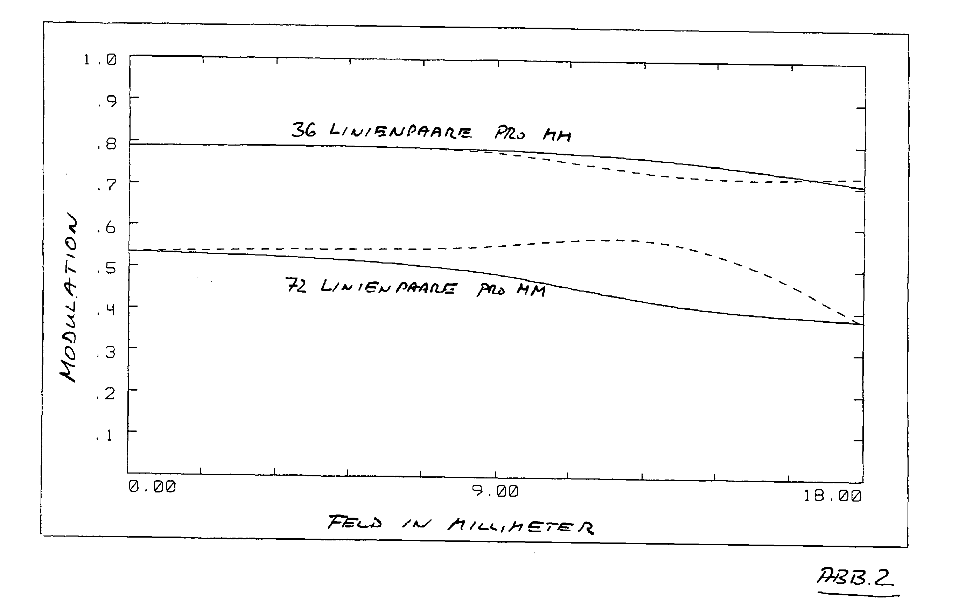

Die den üblichen digitalen Projektoren besitzt ein einzelnes Bildelement eine Größe von 13,68 µm. Das entspricht ungefähr 73 Pixel pro Millimeter bzw. ungefähr 36 Linienpaare pro Millimeter, die der Projektor bestenfalls darstellen kann. Erfahrungsgemäß muss ein Projektionsobjektiv doppelt so viele Linienpaare pro Millimeter wiedergeben können wie der zugehörige Digitalprojektor, damit das Objektiv vom Betrachter als hochwertig empfunden wird. Damit ist für die Beurteilung des Objektivs die Modulationsübertragungsfunktion (MTF) bis zu 72 Liniepaaren pro Millimeter zu betrachten. Abbildung 2 zeigt diese MTF. Die MTF wurde bei den Wellenlängen 460 nm, 545 nm und 620 nm berechnet, wobei die mittlere Wellenlänge mit dem Gewicht 2, die anderen Wellenlängen mit dem Gewicht 1 bewertet wurden. Die MTF zeigt gute Kontrastwerte bei 36 Linienpaaren pro Millimeter und bei 72 Linienpaaren pro Millimeter. Der geringe Abfall des Kontrasts von der Mitte zum Rand weist auf eine sehr gute Korrektur des Farbquerfehlers hin. Die Korrektur dieses Fehlers ist bei der digitalen Projektion besonders wichtig, weil er zu störenden Farbrändern führt.

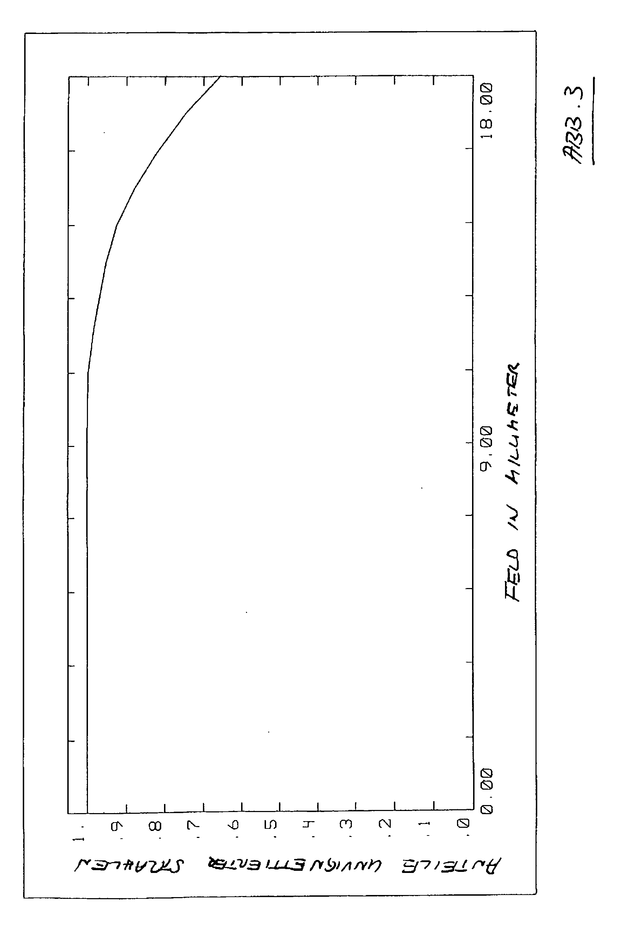

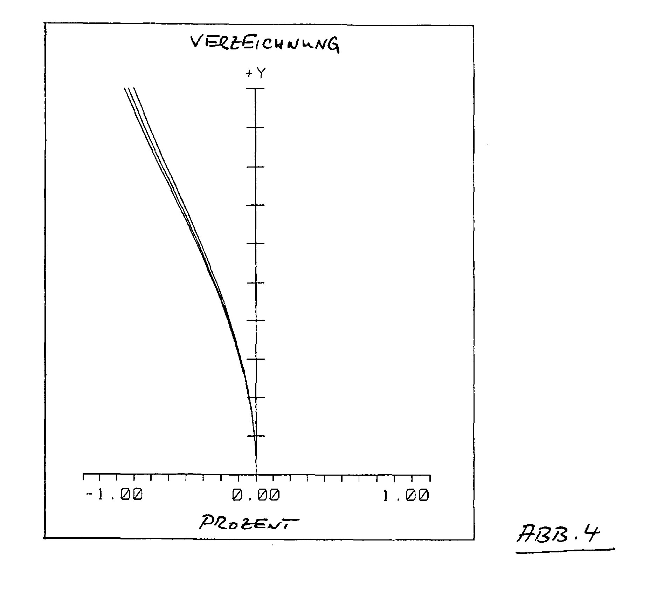

Abbildung 3 zeigt die Vignettierung und Abbildung 4 die Verzeichnung dieses Objektivs.

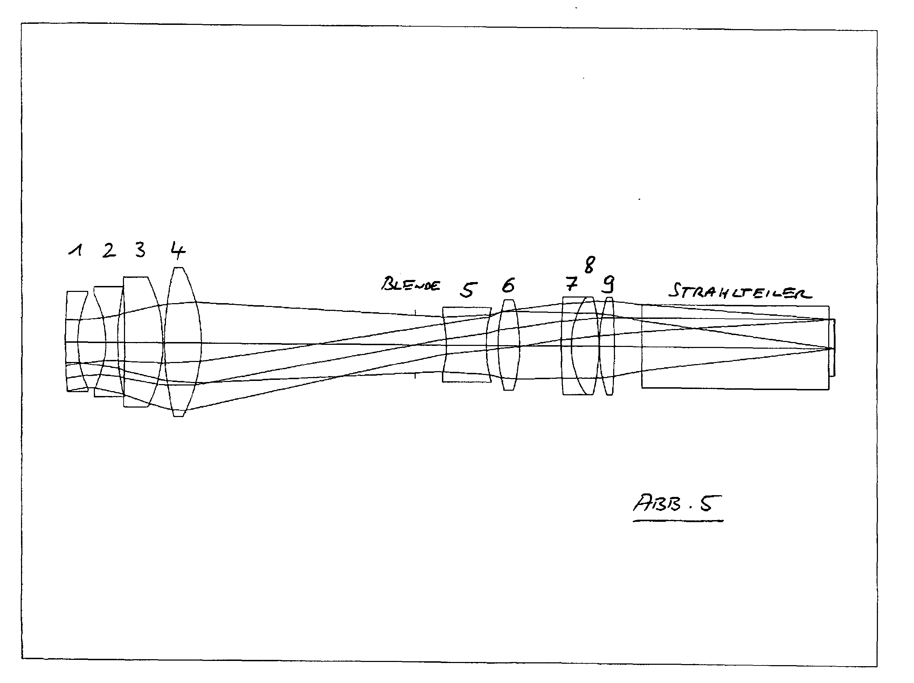

Abbildung 5 zeigt ein weiteres Ausführungsbeispiel. Die Brennweite des Objektivs wurde auf 69 mm erhöht. Die genauen optischen Daten dieses Projektionsobjektivs sind auch dem Anspruch 13 zu entnehmen. Das Projektionsobjektiv gemäß dieser Ausführungsform stellt sich wie folgt dar:
Daten der Linsen 1 bis 9:

| Kommentar | Fläche | Radius [mm] | Dicke [mm] | n_{d} | ν_{d} |
|---|---|---|---|---|---|
| Linse 1 | 1 | 489.067 | 7.500 | 1.7440 | 44.9 |
| | 2 | 76.083 | 17.565 | | |
| Linse 2 | 3 | -65.740 | 7.500 | 1.7552 | 27.6 |
| | 4 | 166.123 | 4.232 | | |
| Linse 3 | 5 | -1167.668 | 24.000 | 1.7552 | 27.6 |
| | 6 | -95.446 | 0.992 | | |
| Linse 4 | 7 | 191.825 | 23.000 | 1.6584 | 50.9 |
| | 8 | -101.162 | 132.991 | | |
| Blende | 9 | Plan | 19.359 | | |
| Linse 5 | 10 | -79.551 | 24.881 | 1.6727 | 32.3 |
| | 11 | 92.129 | 7.145 | | |
| Linse 6 | 12 | 107.711 | 13.349 | 1.6584 | 50.9 |
| | 13 | -108.508 | 25.694 | | |
| Linse 7 | 14 | 448.856 | 6.000 | 1.6204 | 60.3 |
| Linse 8 | 15 | 56.510 | 17.000 | 1.4970 | 81.6 |
| | 16 | -133.601 | 0.200 | | |
| Linse 9 | 17 | 107.738 | 9.199 | 1.4970 | 81.6 |
| | 18 | -409.370 | 17.000 | | |
| Strahlteiler | 19 | Plan | 116.500 | 1.5168 | 64.2 |
| Schutzglas | 20 | Plan | 3.000 | 1.5085 | 61.2 |
| | 21 | Plan | 0.522 | | |
| Objekt | 22 | Plan | | | |

Aus praktischen Gründen ist das Objektiv in umgekehrter Lage (Abbildung von der Vergrößerungsseite zur Verkleinerungsseite) dargestellt. Ein negatives Vorzeichen beim Radius bedeutet, dass der Mittelpunkt des Linsenfläche relativ zum Scheitel auf der Vergrößerungsseite liegt. Die Flächen 1 bis 18 beschreiben das Objektiv gemäß Anspruch; die Flächen 19 bis 22 stellen Strahlteiler, Schutzglas und Chip des Projektors dar.

Bei dem Objektiv gemäß dieser Ausführungsform beträgt die relative Öffnung 1 : 2,5. Auf der Verkleinerungsseite ist wieder ein Kreis mit Halbmesser 18 mm nutzbar, was auf der Vergrößerungsseite zu einem maximalen Projektionswinkel von 2w=29.2 ° führt. Der Abstand der Pupille vom ersten Linsenscheitel beträgt auf der Vergrößerungsseite 90 mm. Durch den verkleinerten Projektionswinkel ist die Erhöhung des Pupillenabstands gegenüber dem ersten Beispiel im Hinblick auf den Einsatz anamorphotischer Vorsätze unproblematisch. Auf der Verkleinerungsseite beträgt der Abstand der Pupille über 5 Meter. Dies bedeutet, dass das Objektiv auf dieser Seite nahezu telezentrisch ist und damit optimal an das Beleuchtungssystem des Projektors angepasst.

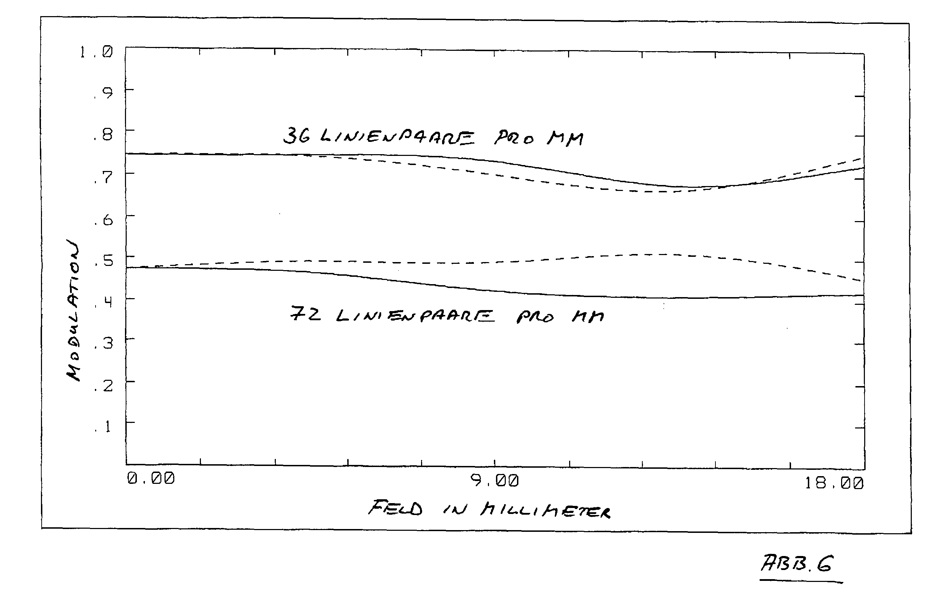

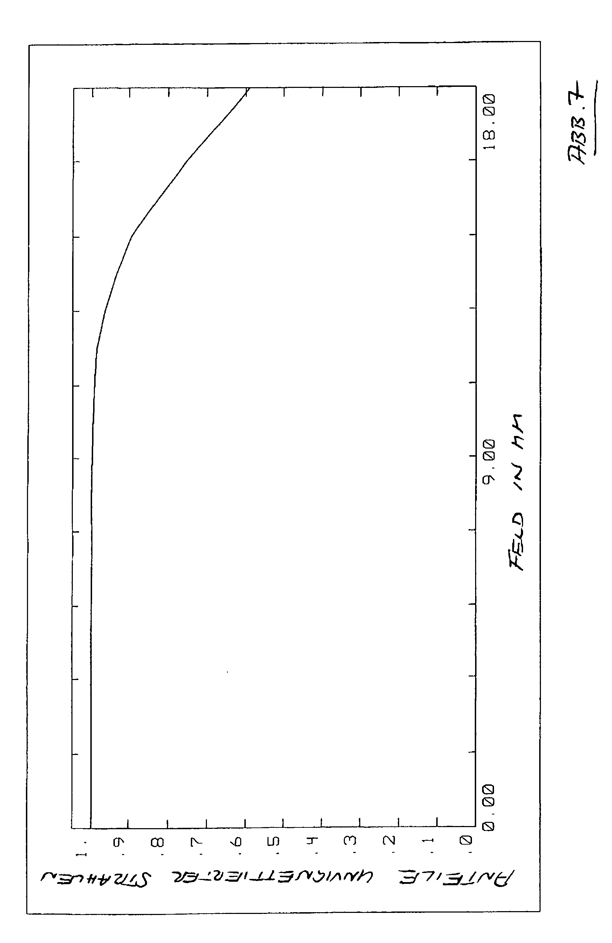

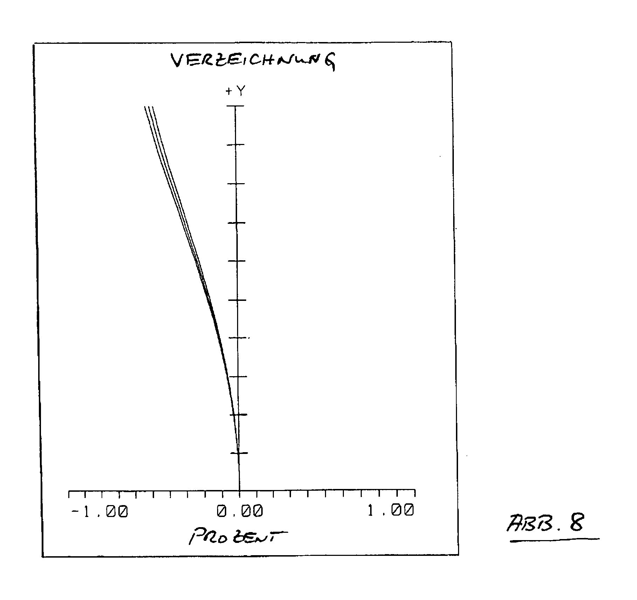

Abbildung 6 zeigt die MTF, Abbildung 7 die Vignettierung und Abbildung 8 die Verzeichnung dieses Objektivs.

## Patentansprüche

1. Projektionsobjektiv fester Brennweite für die digitale Projektion mit folgender Anordnung der Linsen in der Reihenfolge vom Bild (Vergrößerungsseite) zum Objekt (Verkleinerungs- und Beleuchtungsseite):
- eine erste negative Linse (1),
- eine zweite negative Linse (2),
- eine dritte Linse (3),
- eine vierte positive Linse (4),
- eine fünfte Linse (5),
- eine sechste positive Linse (6),
- eine siebte negative Linse (7),
- eine achte positive Linse (8),
- eine neunte positive Linse (9).

2. Projektionsobjektiv nach Anspruch 1, mit folgender Anordnung der Linsen in der Reihenfolge vom Bild (Vergrößerungsseite) zum Objekt (Verkleinerungs- und Beleuchtungsseite):
- eine erste negative Linse (1) mit einer konvexen Fläche auf der Bildseite und einer konkaven Fläche auf der Objektseite,
- eine zweite bikonkave Linse (2),
- eine dritte Linse (3) mit einer konkaven Fläche auf der Bildseite und einer konvexen Fläche auf der Objektseite,
- eine vierte bikonvexe Linse (4),
- eine fünfte Linse (5) mit einer konkaven Fläche zur Objektseite,
- eine sechste bikonvexe Linse (6),
- eine siebte Linse (7) mit einer konkaven Fläche zur Objektseite,
- eine achte bikonvexe Linse (8),
- eine neunte bikonvexe Linse (9).

3. Projektionsobjektiv nach Anspruch 2, wobei die fünfte Linse (5) zur Bildseite eine konvexe oder konkave Fläche aufweist und/oder die siebte Linse (7) zur Bildseite eine konkave oder konvexe Fläche aufweist.

4. Projektionsobjektiv nach einem der Ansprüche 1 bis 3, wobei zwischen der vierten und fünften Linse (4, 5) eine Blende angeordnet ist.

5. Projektionsobjektiv nach einem der Ansprüche 1 bis 3, wobei die folgenden Beziehungen für die Werte der Brechzahlen n_{d} und der abbeschen Zahlen ν_{d} erfüllt sind:
| Linse Nr. | n_{d} | ν_{d} |
|---|---|---|
| 1 | Größer als 1,6 | Kleiner als 62 |
| 2 | Zwischen 1,58 und 1,8 | Kleiner als 62 |
| 3 | Größer als 1,65 | Kleiner als 41 |
| 4 | Zwischen 1,6 und 1,8 | Zwischen 45 und 62 |
| 5 | Größer als 1,64 | Zwischen 30 und 45 |
| 6 | Kleiner als 1,74 | Größer als 44 |
| 7 | Kleiner als 1,75 | Zwischen 40 und 66 |
| 8 | Kleiner als 1,50 | Größer als 70 |
| 9 | Kleiner als 1,50 | Größer als 70 |

6. Projektionsobjektiv nach Anspruch 5, wobei die folgenden Beziehungen für die Werte der Brechzahlen n_{d} und der abbeschen Zahlen ν_{d} erfüllt sind:
| Linse Nr. | n_{d} | ν_{d} |
|---|---|---|
| 1 | Größer als 1,7 | Kleiner als 50 |
| 2 | Zwischen 1,56und 1,8 | Kleiner als 62 |
| 3 | Größer als 1,65 | Kleiner als 35 |
| 4 | Zwischen 1,6 und 1,8 | Zwischen 45 und 60 |
| 5 | Größer als 1,65 | Zwischen 30 und 45 |
| 6 | Kleiner als 1,7 | Größer als 45 |
| 7 | Kleiner als 1,75 | Zwischen 40 und 61 |
| 8 | Kleiner als 1,50 | Größer als 70 |
| 9 | Kleiner als 1,50 | Größer als 70 |

7. Projektionsobjektiv nach einem der Ansprüche 1 bis 6, wobei die abbesche Zahl ν_{d} für alle Linsen kleiner als 85 ist.

8. Projektionsobjektiv nach einem der Ansprüche 1 bis 7, wobei die siebte und achte Linse (7, 8) miteinander verkittet sind.

9. Projektionsobjektiv nach einem der Ansprüche 1 bis 8, wobei die optische Korrektur und die Schnittweite des Objektivs einen Strahlteiler zwischen Objektiv und dem zu projizierendem Objekt zulässt, der einen Glasweg von 80 mm bis 130 mm, vorzugsweise 110 mm bis 130 mm, insbesondere 115 mm bis 125 mm besitzt.

10. Projektionsobjektiv nach einem der Ansprüche 1 bis 9, wobei die objektseitige Pupille wenigstens 800 mm, vorzugsweise wenigstens 1200 mm, insbesondere wenigstens 2000 mm vom Objektiv entfernt ist.

11. Projektionsobjektiv nach einem der Ansprüche 1 bis 10, wobei sämtliche Linsenflächen sphärisch oder plan sind.

12. Projektionsobjektiv nach einem der Ansprüche 1 bis 11 mit folgenden Daten der Linsen 1 bis 9:
| Kommentar | Fläche | Radius [mm] | Dicke [mm] | n_{d} | ν_{d} |
|---|---|---|---|---|---|
| Linse 1 | 1 | 215.573 | 7.400 | 1.8052 | 25.4 |
| | 2 | 60.054 | 19.873 | | |
| Linse 2 | 3 | -86.116 | 6.198 | 1.7292 | 54.5 |
| | 4 | 214.588 | 5.812 | | |
| Linse 3 | 5 | -159.767 | 25.000 | 1.7174 | 29.5 |
| | 6 | -97.046 | 1.422 | | |
| Linse 4 | 7 | 233.759 | 19.000 | 1.7292 | 54.5 |
| | 8 | -110.662 | 133.385 | | |
| Blende | 9 | Plan | 34.694 | | |
| Linse 5 | 10 | 119.584 | 11.300 | 1.8061 | 40.6 |
| | 11 | 52.245 | 3.364 | | |
| Linse 6 | 12 | 192.641 | 7.500 | 1.5168 | 64.2 |
| | 13 | -65.831 | 12.288 | | |
| Linse 7 | 14 | -37.013 | 5.000 | 1.5827 | 46.6 |
| Linse 8 | 15 | 293.564 | 15.600 | 1.4970 | 81.6 |
| | 16 | -48.182 | 0.200 | | |
| Linse 9 | 17 | 181.597 | 15.000 | 1.4970 | 81.6 |
| | 18 | -65.785 | | | |
| | | | | | |
|---|---|---|---|---|---|
| Brennweite: 57 mm Relative Öffnung 1:2.5 Bildwinkel: 2w=35,1 ° | | | | | |

13. Projektionsobjektiv nach einem der Ansprüche 1 bis 11 mit folgenden Daten der Linsen 1 bis 9:
| Kommentar | Fläche | Radius [mm] | Dicke [mm] | n_{d} | ν_{d} |
|---|---|---|---|---|---|
| Linse 1 | 1 | 489.067 | 7.500 | 1.7440 | 44.9 |
| | 2 | 76.083 | 17.565 | | |
| Linse 2 | 3 | -65.740 | 7.500 | 1.7552 | 27.6 |
| | 4 | 166.123 | 4.232 | | |
| Linse 3 | 5 | -1167.668 | 24.000 | 1.7552 | 27.6 |
| | 6 | -95.446 | 0.992 | | |
| Linse 4 | 7 | 191.825 | 23.000 | 1.6584 | 50.9 |
| | 8 | -101.162 | 132.991 | | |
| Blende | 9 | Plan | 19.359 | | |
| Linse 5 | 10 | -79.551 | 24.881 | 1.6727 | 32.3 |
| | 11 | 92.129 | 7.145 | | |
| Linse 6 | 12 | 107.711 | 13.349 | 1.6584 | 50.9 |
| | 13 | -108.508 | 25.694 | | |
| Linse 7 | 14 | 448.856 | 6.000 | 1.6204 | 60.3 |
| Linse 8 | 15 | 56.510 | 17.000 | 1.4970 | 81.6 |
| | 16 | -133.601 | 0.200 | | |
| Linse 9 | 17 | 107.738 | 9.199 | 1.4970 | 81.6 |
| | 18 | -409.370 | | | |
| | | | | | |
|---|---|---|---|---|---|
| Brennweite: 69 mm Relative Öffnung 1:2.5 Bildwinkel: 2w=29,2 ° | | | | | |
